(19) Europäisches Patentamt / European Patent Office / Office européen des brevets

(11) **EP 4 045 961 B1**

(12) **EUROPÄISCHE PATENTSCHRIFT**

(45) Veröffentlichungstag und Bekanntmachung des Hinweises auf die Patenterteilung:
**05.03.2025 Patentblatt 2025/10**

(21) Anmeldenummer: **20796713.4**

(22) Anmeldetag: **14.10.2020**

(51) Internationale Patentklassifikation (IPC):
**G02B 21/00** *(2006.01)* **G02B 21/36** *(2006.01)*

(52) Gemeinsame Patentklassifikation (CPC):
**G02B 21/367; G02B 21/0076; G02B 21/008**

(86) Internationale Anmeldenummer:
**PCT/EP2020/078880**

(87) Internationale Veröffentlichungsnummer:
**WO 2021/074213 (22.04.2021 Gazette 2021/16)**

(54) **VERFAHREN ZUR KONTRASTERHÖHUNG**

METHOD FOR INCREASING CONTRAST

PROCÉDÉ POUR AUGMENTER LE CONTRASTE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **15.10.2019 DE 102019127846**

(43) Veröffentlichungstag der Anmeldung:
**24.08.2022 Patentblatt 2022/34**

(73) Patentinhaber: **Georg-August-Universität Göttingen Stiftung Öffentlichen Rechts, Universitätsmedizin 37099 Göttingen (DE)**

(72) Erfinder:
• **WOUTERS-BUNT, Freddy Silvester 37085 Göttingen (DE)**
• **HOCK, Stephan 37075 Göttingen (DE)**

(74) Vertreter: **Betten & Resch Patent- und Rechtsanwälte PartGmbB Maximiliansplatz 14 80333 München (DE)**

(56) Entgegenhaltungen:
**WO-A1-2017/075275 DE-A1- 10 250 775**

• **MOHAMMAD SHORIF UDDIN ET AL: "Restoration of Uneven Illumination in Light Sheet Microscopy Images", MICROSCOPY AND MICROANALYSIS,, vol. 17, no. 4, 1 August 2011 (2011-08-01), pages 607 - 613, XP001564068, ISSN: 1431-9276, [retrieved on 20110620], DOI: 10.1017/S1431927611000262**
• **WANG D ET AL: "Sheet-scanned dual-axis confocal microscopy using Richardson-Lucy deconvolution", OPTICS LETTERS, OPTICAL SOCIETY OF AMERICA, US, vol. 39, no. 18, 15 September 2014 (2014-09-15), pages 5431 - 5434, XP001591865, ISSN: 0146-9592, [retrieved on 20140915], DOI: 10.1364/OL.39.005431**

EP 4 045 961 B1

**Beschreibung**

**HINTERGRUND DER ERFINDUNG**

In der Mikroskopie ist die Dekonvolution von gemessenen Bilddaten eine wichtige und häufige Anwendung. Kommerzielle Software steht bereit, um dies für die gängigen Mikroskopietypen, vor allem konfokale Mikroskopie, durchzuführen. Im Spezialfall der makroskopischen Lichtblattmikroskopie sind diese generalisierten Lösungsansätze jedoch nicht anwendbar, da sich die benötigte Punktspreizfunktion (psf) in Abhängigkeit der Position innerhalb des Gewebes ändert, also nicht homogen ist. Es ist eine ausreichend hohe Auflösung in der Dimension normal zum Lichtblatt notwendig, um eine psf ausreichend eng zu diskretisieren respektive iterativ zu ermitteln. Bei Proben in der Größenordnung von mehreren Millimetern steigt die benötigte Datenmenge dann jedoch sehr stark an, auch wenn aus pathologischer Sicht eine geringere Auflösung ausreichend wäre. Der mit Datenspeicherung und -auswertung verbundene Mehraufwand ist ein entscheidender ökonomischer Faktor.

Ein theoretisch möglicher Ansatz zur Dekonvolution ist die Berechnung der inversen psf mittels der sogenannten linearen Dekonvolutionsmethoden, wie beispielsweise beschrieben in SARDER, Pinaki; NEHORAI, Arye. Deconvolution methods for 3-D fluorescence microscopy images. IEEE Signal Processing Magazine, 2006, 23. Jg., Nr. 3, S. 32-45. Ansätze zur numerischen Berechnung der inversen psf über Verfahren der kleinsten Quadrate werden präsentiert in PREZA, Chrysanthe, et al. Regularized linear method for reconstruction of three-dimensional microscopic objects from optical sections, JOSA A, 1992, 9. Jg., Nr. 2, S. 219-228.

Die klassische Dekonvolution ist die Division des konvolvierten Bildes durch die psf im Frequenzraum mit den entsprechenden Überlegungen zur Rauschbehandlung, z. B. der Anwendung eines Tiefpassfilters. Die lineare Dekonvolution führt dabei zu einer Bildkorrektur, die den Kontrast verbessert, indem das durch die psf erzeugte "Verschmieren" von Punkten aus dem Bild "herausgerechnet" wird. Dies stellt in der Realität, insbesondere bei dreidimensionalen Abbildungen von nicht homogenem Gewebe, eine Herausforderung dar, da sich die psf abhängig von der Position im Gewebe ändert.

Zwar kann eine diskrete, aber endliche psf (mit einer endlichen Anzahl von Einträgen in der Konvolutionsmatrix) in einigen speziellen Fällen, namentlich wenn die psf eine multiplikative Funktion ist, invertiert werden. Jedoch resultieren die meisten endlichen diskreten psf, und alle mehrdimensionalen psf, in inversen psf mit unendlich vielen Einträgen, deren Beträge mit zunehmendem Abstand vom zu dekonvolvierenden Messpunkt nicht gegen null streben. Da nur eine endliche Anzahl an Messpunkten zur Verfügung stehen, führt dieser Ansatz in der Praxis nicht zu sinnvollen Ergebnissen. In mikroskopischen Auflösungen muss daher eine Dekonvolution durch Division im Frequenzraum erfolgen. Aber auch dann bleibt das Problem der ortsabhängigen psf ungelöst.

Wie bereits oben erwähnt wäre bei der Lichtblattmikroskopie eine hohe Auflösung in der Dimension normal zum Lichtblatt notwendig, um eine psf ausreichend eng zu diskretisieren, respektive iterativ zu ermitteln. Hierzu wäre ein vergleichsweise geringer Abstand zwischen den einzelnen Lichtblattebenen erforderlich, was mit den erwähnten Problemen wie etwa einer hohen Datenmenge und einer Instabilität der Lösung einhergeht.

MOHAMMAD SHORIF UDDIN ET AL: "Restoration of Uneven Illumination in Light Sheet Microscopy Images", MICROSCOPY AND MICROANALYSIS" Bd. 17, Nr. 4, 1. August 2011(2011-08-01), Seiten 607-613, XP001564068, ISSN: 1431-9276, DOI: 10.1017/S1431927611000262 offenbart ein Verfahren zur Kontrasterhöhung eines dreidimensionalen Lichtblattmikroskopiebildes, das aus N einzelnen jeweils einer Lichtblattebene entsprechenden Bildern gebildet wird, die in z-Richtung in mindestens einem Abstand d voneinander beabstandet sind, wobei die x/y-Ebene die Lichtblattebene und die x-Richtung die Ausbreitungsrichtung des Lichtblatts der Lichtblattebene ist.

**ZUSAMMENFASSUNG DER ERFINDUNG**

Die vorliegende Erfindung ist in Anspruch 1 definiert. Die abhängigen Ansprüche definieren Ausführungsbeispiele der Erfindung.

Gemäß einem Ausführungsbeispiel weist ein Verfahren zur Kontrasterhöhung eines dreidimensionalen Lichtblattmikroskopiebildes, das aus N einzelnen jeweils einer Lichtblattebene entsprechenden Bildern gebildet wird, die in z-Richtung in mindestens einem Abstand d voneinander beabstandet sind, wobei die x/y-Ebene die Lichtblattebene und die x-Richtung die Ausbreitungsrichtung des Lichtblatts der Lichtblattebene ist, auf:

Dekonvolution des dreidimensionalen Bildes in z-Richtung, umfassend:

Für jeden Intensitätsvektor aus N Intensitäten ($I_{x,y,1}$, ... , $I_{x,y,N}$) mit gleichem x/y-Wert, Multiplikation mit einer tridiagonalen N X N Dekonvolutionsmatrix, die jedem Voxel (x, y, n) einen Korrekturparameter f1 zuordnet, mit dem durch die Multiplikation der Dekonvolutionsmatrix mit dem Intensitätsvektor ($I_{x,y,1}$, ... , $I_{x,y,N}$) für eine Komponente I(x, y, n) des Intensitätsvektors die Intensitäten I(x, y, n+1) und I(x, y, n-1) der entsprechenden Voxel der benachbarten Bildebenen multipliziert werden, bevor sie vom Intensitätswert I(x, y,n) abgezogen werden, wobei der Abstand zwischen zwei Lichtblattebenen größer ist als die Halbwertsbreite der Punktspreizfunktion in z-Richtung.

Diese Form der Dekonvolution in z-Richtung macht sich die makroskopische Eigenschaft der Lichtblattmikroskopie zu Nutze, dass der Abstand zwischen den einzelnen Lichtblattebenen so groß ist, dass nur das unmittelbar benachbarte Lichtblatt bei der Dekonvolution in z-Richtung berücksichtigt werden muss, weil die weiter entfernten Lichtblattebenen keinen signifikanten Beitrag leisten. Dadurch reduziert sich die Dekonvolutionsmatrix für die N Voxel in z-Richtung für einen gegebenen x/y-Wert auf eine tridiagonale N X N-Matrix, die für einen gegebenen Voxel lediglich einen Korrekturwert f1 für die jeweils benachbarten Bildebenen zuordnet. Die Dekonvolution wird dadurch verglichen mit herkömmlichen Ansätzen stark vereinfacht.

Gemäß einem Ausführungsbeispiel wird der Korrekturfaktor f1 mit zunehmender Eindringtiefe des Lichtblatts in das Gewebe größer gewählt wird.

Dies trägt der Tatsache Rechnung, dass sich das Lichtblatt (und damit die psf) mit zunehmendem Eindringen des Lichtblatt in das Gewebe in x-Richtung in z-Richtung aufweitet.

Gemäß einem Ausführungsbeispiel umfasst das Verfahren ferner:
Ermittlung des Korrekturfaktors f1 am Eindringort des Lichtblatts in das Gewebe durch:

Berechnen der Dekonvolution sowie eines Qualitätsmaßes des dekonvolvierten Bildes basierend auf unterschiedlichen Korrekturparametern f1 für einen Ausschnitts des Geamtbildes, der ausgehend vom Eindringort des Lichtblatts die ersten k Voxel in x-Richtung umfasst, wobei k klein ist gegen die Ausdehnung des Bildes in x-Richtung, und
Wahl desjenigen Korrekturparameters f1, für den das berechnete Qualitätsmaß der größten Qualitätsverbesserung entspricht.

Auf diese Weise kann der Korrekturfaktor am Eindringort des Lichtblatts experimentell bzw. rechnerisch auf Grundlage des aufgenommenen Bildes bestimmt werden.

Gemäß einem Ausführungsbeispiel umfasst das Verfahren ferner: Repräsentation der Abhängigkeit des Korrekturwerts f1 von der Eindringtiefe in x-Richtung durch eine monoton steigende Funktion des Korrekturwerts f1(x);
Berechnung, für unterschiedliche Funktionen f1(x), der jeweilige Dekonvolution in z-Richtung des Gesamtbildes sowie eines Qualitätsmaßes des dekonvolvierten Gesamtbildes,

Auswahl derjenigen Funktion f1(x), die das beste Qualitätsmaß liefert, als Funktion zur Repräsentation des eintrittstiefenabhängigen Korrekturwerts f1(x).

Auf diese Weise kann die eindringtiefenabhängige Korrekturfunktion und somit auch die Dekonvolutionsmatrix für die Dekonvolution in z-Richtung bestimmt werden.

Gemäß einem Ausführungsbeispiel umfasst das Verfahren ferner:
Dekonvolution des Bildes in der x/y-Ebene für jede Bildebene unter Verwendung einer zweidimensionalen Punktspreizfunktion, deren Radius von der Gewebetiefe des zu dekonvolvierenden Voxels in z-Richtung abhängt.

Auf diese Weise kann die laterale Dekonvolution durchgeführt werden, wobei der Gewebetiefenabhängigkeit der Punktspreizfunktion Rechnung getragen wird.

Gemäß einem Ausführungsbeispiel umfasst das Verfahren ferner:

Für jede Bildebene, Durchführen der zweidimensionalen Dekonvolution für unterschiedliche Punktspreizfunktionen die gewebetiefenabhängig sind;
Berechnen eines Qualitätsmaßes für das dekonvolvierte Bild,
Auswahl einer gewebetiefenabhängigen Punktspreizfunktion, die zu einem verbesserten Kontrastwert führt, aus der Mehrzahl von Punktspreizfunktionen, für die die Dekonvolution berechnet wurde.

Auf diese Weise kann eine geeignete Punktspreizfunktion zur lateralen Dekonvolution ermittelt werden.

Gemäß einem Ausführungsbeispiel wird für die gewebetiefenabhängige Punktspreizfunktion eine Funktion verwendet, deren Radius mit zunehmender Gewebetiefe ansteigt, wobei vorzugsweise der Anstieg der Radiusvergrößerung jedoch stetig abfällt.

Dieser Ansatz für die Punktspreizfunktion berücksichtigt das Ergebnis von Monte Carlo-Simulation betreffend die Gestalt und Gewebetiefenabhängigkeit der Punktspreizfunktion.

Gemäß einem Ausführungsbeispiel wird als Punktspreizfunktion eine Funktion gewählt, für die die mittlere Amplitude der hohen Raumfrequenzen, die jenseits eines Raumfrequenzschwellwerts liegen, ein Minimum beträgt oder von einem Minimum nicht mehr als einen vorbestimmten Schwellwert abweicht.

Dies trägt dem Umstand Rechnung, dass eine Auswahl der Punktspreizfunktion lediglich auf Basis der Qualitätsverbesserung des Bildes solche Punktspreizfunktionen bevorzugen kann, die zu Artefakten wegen hochfrequenter Komponenten führen. Durch Auswahl einer Punktspreizfunktion, bei der die mittlere Amplitude der hohen Raumfrequenzen ein Minimum beträgt oder nicht mehr als ein Schwellwert von einem solchen Minimum abweicht, können Artefakte vermieden werden.

Gemäß einem Ausführungsbeispiel ist der Abstand zwischen zwei Lichtblattebenen größer als die Halbwertsbreite der Punktspreizfunktion in z-Richtung.

Durch diese Bedingung wird sichergestellt, dass es sich um eine "makroskopische" Lichtblattmikroskopie handelt, bei der die Korrektur in z-Richtung mittels einer tridiagonalen Matrix, die nur die unmittelbaren Nachbarn berücksichtigt, möglich ist.

**BESCHREIBUNG DER ZEICHNUNGEN**

Fig. 1 bis 4 zeigen die Ergebnisse einer Simulation einer Dekonvolution in z-Richtung gemäß einem Ausführungsbeispiel für einen Satz von zufällig generierten eindimensionalen Intensitätsvektoren.

Fig. 5 zeigt die Abhängigkeit der Bildqualität von einem Exponenten der Ansatzfunktion $f\_1(x)$ gemäß einem Ausführungsbeispiel.

Fig. 6 zeigt schematisch die Verarbeitungsschritte der Dekonvolution in der x/y-Ebene gemäß einem Ausführungsbeispiel.

Fig. 7 zeigt den Bildkontrast als Funktion des Korrekturexponenten der Funktion $r\_psf(z)$ gemäß einem Ausführungsbeispiel.

Fig. 8 zeigt die mittlere Amplitude der hohen Raumfrequenzen abhängig vom Korrekturexponenten der Funktion $r\_psf(z)$ für zwei verschiedene Bildtiefen.

Fig. 9 bis 12 die mittleren Intensitäten und den Kontrast entlang des Lichtblatts für die Prozessschritte gemäß einem Ausführungsbeispiel an zwei verschiedenen Gewebeproben.

Fig. 13 bis 19 zeigt Lichtblattaufnahmen einer Einzelebene nach den Bearbeitungsschritten gemäß einem Ausführungsbeispiel an zwei verschiedenen Gewebeproben.

## DETAILLIERTE BESCHREIBUNG

Die vorliegende Erfindung verfolgt einen neuen Ansatz zur Dekonvolution von Lichtblattmikroskopiebildern, der nachfolgend anhand von Ausführungsbeispielen beschrieben wird.

Bei der Lichtblattmikrosopie sind Beleuchtungsrichtung und Detektionsrichtung zueinander orthogonal. Ein mittels Laser oder einer Zylinderoptik erzeugtes Lichtblatt ist dabei in der Fokusebene des Detektionsobjektivs justiert. Durch Verschieben der Probe "wandert" das Lichtblatt in z-Richtung durch die Probe, ein bei einem bestimmten z-Wert aufgenommenes Bild entspricht dann einer Lichtblattebene. Durch Aufnahme von Bildern, die jeweils Lichtblattebenen mit unterschiedlichen z-Werten entsprechen, entsteht so ein Bildstapel aus Bildern, die unterschiedlichen Schnittebenen der Probe entsprechen und somit letztlich ein dreidimensionales Bild, bei dem eine Bildebene in z-Richtung einer Lichtblattebene entspricht.

Gemäß einem Ausführungsbeispiel wird für die Dekonvolution eines solchen Bildes zunächst eine Dekonvolution in Richtung senkrecht zur Lichtblattebene (z-Richtung) vorgenommen. Die Art und Weise, wie diese Dekonvolution in z-Richtung (als z-Richtung wird nachfolgend die Richtung der Objektivachse senkrecht zur Lichtblattebene bezeichnet) vorgenommen wird, weist dabei einige Besonderheiten auf. Zunächst basiert diese Dekonvolution in Richtung senkrecht zur Lichtblattebene auf der (berechtigten) Annahme, dass bei makroskopischem Abstand zwischen zwei Bildern bzw. deren Lichtblattebenen größer ist als die Halbwertsbreite der Punktspreizfunktion. Dies hat zur Folge, dass für ein n-tes Bild im Stapel von insgesamt N Lichtblattebenen entsprechenden Bildern lediglich die beiden unmittelbar benachbarten Lichtblattebenden entsprechenden Bilder, d. h. das (n-1)-te und das (n+1)-te Bild, einen Einfluss auf das n-te Bild haben und daher nur diese beiden bei der Dekonvolution berücksichtigt werden müssen. Durch diese Annahme vereinfacht sich die Dekonvolutionsmatrix für die Dekonvolution in z-Richtung deutlich.

Zur Dekonvolution wird daher gemäß einem Ausführungsbeispiel für einen gegebenen Voxel $I(x,y,n)$ der n-ten Bildebene die Intensität $I(x,y,n+1)$ des benachbarten Voxels der benachbarten Bildebene mit einem Korrekturfaktor multipliziert und von der Intensität $I(x,y,n)$ abgezogen. Gleiches geschieht mit der Intensität $I(x,y,n-1)$ des anderen benachbarten Voxels in z-Richtung. Auf diese Weise erfolgt die Dekonvolution der N Voxel in z-Richtung für einen gegebenen Ort x/y in der x/y-Ebene mittels einer tridiagonalen Matrix, die als Multiplikationsfaktor den Intensitäten der benachbarten Bildebenen jeweils den Korrekturfaktor f1 zuweist.

Mit anderen Worten: Für jeden Intensitätsvektor aus N Intensitäten $(I_{x,y,1}, \ldots, I_{x,y,N})$ mit gleichem x/y-Wert des Bildes erfolgt zum Zwecke der Dekonvolution die Multiplikation mit einer tridiagonalen N X N Dekonvolutionsmatrix, die jedem Voxel $(x, y, n)$ des Intensitätsvektors $(I_{x,y,1}, \ldots, I_{x,y,N})$ einen Korrekturparameter f1 zuordnet, mit dem durch die Multiplikation der Dekonvolutionsmatrix mit dem Intensitätsvektors $(I_{x,y,1}, \ldots, I_{x,y,N})$ für die Komponente $I(x, y, n)$ des Intensitätsvektors die Intensitäten Ix, y,n+1 und Ix, y,n-1 der entsprechenden Voxel der benachbarten Bildebene multipliziert werden, bevor sie vom Intensitätswert $I(x, y,n)$ abgezogen werden.

Gemäß einem Ausführungsbeispiel kann als Näherung dabei ein konstanter Korrekturfaktor f1 angesetzt werden. Gemäß einem Ausführungsbeispiel wird als Korrekturfaktor willkürlich ein Wert kleiner als 0.5 gewählt. Die willkürliche Wahl eines Korrekturfaktors führt jedoch nicht unbedingt zu einem optimierten Ergebnis.

Um einen geeigneten Korrekturfaktor auszuwählen, kann dieser gemäß einem weiteren Ausführungsbeispiel experimentell bzw. mittels einer Optimierungsrechnung ermittelt werden. Hierzu kann beispielsweise für verschiedene Korrekturfaktoren die Dekonvolution berechnet werden und dann ein Kontrastwert (oder ein anderes Qualitätsmaß) für das Bild nach der Dekonvolution ermittelt werden. Derjenige Korrekturfaktor f1, der die größte Kontrastverbesserung (oder die größte Verbesserung des anderen Qualitätsmaßes) liefert, kann dann als Korrekturfaktor für die tridiagonale Dekonvolutionsmatrix gewählt werden.

Ein derartiger Ansatz berücksichtigt jedoch nicht, dass sich das Lichtblatt in z-Richtung umso mehr aufweitet, je mehr es in x-Richtung (d. h. in Ausbreitungsrichtung des Lichtblatts) in das Gewebe eindringt. Um diesem Effekt Rechnung zu tragen, kann der Korrekturfaktor gemäß einem weiteren Ausführungsbeispiel abhängig von der Position in Ausbreitungsrichtung des Lichtblatts (x-Richtung) gewählt werden. Die Verbreiterung des Lichtblatts in z-Richtung mit zunehmendem Eindringen des Lichtblatts in das Gewebe in Richtung der Ausbreitung des Lichts (x-Richtung) wird dann beispielsweise dadurch Rechnung getragen, dass der Korrekturfaktor f1 mit zunehmender Eindringtiefe des Lichtblatts in das Gewebe größer gewählt wird.

Gemäß einem Ausführungsbeispiel wird der Korrekturfaktor f1 abhängig von der Eindringtiefe x gewählt, wobei dabei vorzugsweise f1(x) mit zunehmendem x monoton ansteigt.

Experimentell lässt sich für einen solchen Ansatz gemäß einem Ausführungsbeispiel f1(x) wie folgt bestimmen. Zunächst wird für einen Bildausschnitt in der Nähe des Eindringortes des Lichtblattes, also beispielsweise für einen Bildausschnitt mit kleinen x-Werten, für verschiedene Werte f1 die Dekonvolution des Bildausschnitts berechnet. Dabei wird berechtigterweise davon ausgegangen, dass für kleine x-Werte, d. h. für geringe Gewebetiefen in x-Richtung, sich das Lichtblatt noch nicht signifikant aufgeweitet hat und somit der Korrekturwert f1 für diese x-Werte durch einen konstanten Faktor angenähert werden kann, der dem Korrekturwert f1 am Eindringort des Lichtblatts in das Gewebe entspricht. Vorzugsweise ist die Anzahl der Voxel in x-Richtung, die für den Bildausschnitt verwendet werden, klein gegenüber der Gesamtzahl der Voxel des Gesamtbildes in x-Richtung. So werden beispielsweise weniger als die ersten 20% der Voxel in x-Richtung für den Bildausschnitt verwendet, alternativ weniger als 10%, weiter alternativ weniger als 5%, weiter alternativ weniger als 1%. Weiter alternativ können beispielsweise die ersten zwei, die ersten drei, die ersten 4, oder die ersten 5-10 Voxel in x-Richtung als zu verwendender Bildausschnitt gewählt werden. Für all diese Beispiele ist die Zahl der Voxel in x-Richtung des gewählten Bildausschnitts für die Optimierung klein gegenüber der Gesamtzahl der Voxel in x-Richtung, d. h. es wird ein Bildausschnitt gewählt, der einer kleinen Eindringtiefe des Lichtblatts in x-Richtung entspricht.

Für den gewählten Bildausschnitt wird dann das dekonvolvierte Bild für verschiedene Parameter f1 berechnet und anschließend ein Qualitätsmaß des dekonvolvierten Bildes berechnet, z. B. ein Kontrastwert. Derjenige Parameter f1, der das "beste" Qualitätsmaß für das dekonvolvierte Bild liefert, wird dann als Korrekturparameter f1(0) für den Eintrittsort des Lichtblatts gewählt.

Die Aufweitung der psf kann dann abgebildet werden durch eine monoton steigende Funktion des Korrekturwerts f1(x). Für unterschiedliche Funktionen werden dann wiederum für das Gesamtbild die jeweilige Dekonvolution in z-Richtung und ein Qualitätsmaß des dekonvolvierten Bildes berechnet. Diejenige Funktion f1(x), die das beste Qualitätsmaß (z. B. die größte Kontrastverbesserung) liefert, wird dann als Funktion zur Repräsentation der eintrittstiefenabhängigen psf bzw.

zur Bildung der entsprechenden Dekonvolutionsmatrix mit ihren Einträgen f1 gewählt.

Mit der so ermittelten eindrigtiefenabhängigen Dekonvolutionsmatrix kann die Dekonvolution in z-Richtung mit geringem Aufwand und einem doch signifikanten qualitätsverbessernden Effekt durchgeführt werden.

In einem weiteren Schritt, der ggf. auch unabhängig von der Korrektur der Lichtblattdicke in z-Richtung, d. h. der Dekonvolution in z-Richtung, durchgeführt werden kann, erfolgt dann die Dekonvolution in der x/y-Ebene.

Gemäß einem Ausführungsbeispiels wird dabei eine zweidimensionale psf verwendet, deren Radius von der Gewebetiefe in z-Richtung, d. h. in Objektivrichtung, abhängt. Für unterschiedliche Ansatzfunktionen für die Punktspreizfunktion wird dabei die zweidimensionale Dekonvolution gewebetiefenabhängig für jedes Lichtblatt durchgeführt und ein Qualitätsmaß für das dekonvolvierte Bild berechnet, z. B. ein Kontrastwert. Gemäß einem Ausführungsbeispiel wird dann eine gewebetiefenabhängige psf ausgewählt, die zu einem verbesserten Kontrastwert führt.

Gemäß einem weiteren Ausführungsbeispiel wird für die gewebetiefenabhängige psf eine Funktion verwendet, deren Radius mit zunehmender Gewebetiefe ansteigt, wobei vorzugsweise der der Anstieg der Radiusvergrößerung jedoch stetig abfällt.

Gemäß einem Ausführungsbeispiel wird als Punktspreizfunktion eine Funktion gewählt, für die die mittlere Amplitude der hohen Raumfrequenzen, die jenseits eines Raumfrequenzschwellwerts liegen, ein Minimum beträgt oder von einem Minimum nicht mehr als einen vorbestimmten Schwellwert abweicht.

Dies trägt dem Umstand Rechnung, dass eine Auswahl der Punktspreizfunktion lediglich auf Basis der Qualitätsverbesserung des Bildes solche Punktspreizfunktionen bevorzugen kann, die zu Artefakten wegen hochfrequenter Komponenten führen. Durch Auswahl einer Punktspreizfunktion, bei der die mittlere Amplitude der hohen Raumfrequenzen ein Minimum beträgt oder nicht mehr als ein Schwellwert von einem solchen Minimum abweicht, können Artefakte vermieden werden. Der Schwellwert kann dabei beispielsweise ein gewisser Prozentwert des Minimalwerts sein, z. B: 10%, 15% oder 20%. Andere sinnvolle Schwellwerte sind für den Fachmann ebenfalls vorstellbar, z. B. 30% des Minimums, 40% des Minimums, oder 50% des Minimums. Der Wert sollte so gewählt werden, dass er noch in sinnvoller Weise als "in der Nähe des Minimums liegend" bezeichnet werden kann. Dies kann beispielsweise auch dann der Fall sein, wenn der Wert um einen bestimmten Prozentsatz, z. B: 20%, 30% oder 40% von der Differenz zwischen Minimum und Maximum vom Minimalwert abweicht.

Wurde unter Berücksichtigung der Kontrastverbesserung sowie der mittleren Amplitude der hohen Raumfrequenzen eine Punktspreizfunktion ausgewählt, so kann dann mit einem Standardverfahren (etwa dem Richardson-Lucy-Algorithmus) die zweidimensionale Dekonvolution durchgeführt werden.

Dazu werden vorzugsweise aus der Menge der lokalen Gewebetiefen auf einem Bild Gruppen von Pixeln ähnlicher Gewebetiefen gebildet. Die Anzahl dieser Gruppen ist dabei frei wählbar. Für jede Pixelgruppe wird die mittlere lokale Gewebetiefe, damit die lokale gewebetiefenabhängige Punktspreizfunktion berechnet. Die Dekonvolution wird dann für jede Gruppe auf das gesamte Bild gemäß der lokalen mittleren psf durchgeführt. Erst danach erfolgt die Maskierung der dekonvolvierten Bilder gemäß den Pixelgruppen. Zusammengesetzt ergeben sie das vollständig dekonvolvierte Bild.

Die Dekonvolution des gesamten Bildes ergibt sich dann somit aus der Dekonvolution in z-Richtung (der Korrektur der "Lichtblattdicke" mittels tridiagonaler Dekonvolutionsmatrix) sowie der zweidimensionalen Dekonvolution in der x/y-Ebene auf Grundlage einer zweidimensionalen psf.

Ein neuer Aspekt der zuvor beschriebenen Methodik gemäß eines Ausführungsbeispiels sind dabei die Berücksichtigung der Gewebetiefe in zwei Raumrichtungen (Lichtblattausbreitung und Detektionsachse); die Trennung der Raumrichtungen bei der Korrektur, und somit die Vereinfachung der Dekonvolution auf den zweidimensionalen Fall, sowie die Kombination empirischer und theoretischer Ansätze zur Optimierung des Algorithmus bzw. zur Ermittlung der Punktspreizfunktionen.

Die Korrektur der Lichtblattdicke nutzt die makroskopische Auflösung des Bildstapels in z- Richtung, um eine exakte inverse Konvolutionsmatrix zu berechnen. Damit ist auch in diesem Auflösungsbereich, bei dem klassische Algorithmen keine Korrektur zulassen würden, eine Verbesserung des Kontrastes möglich. Der Algorithmus ist stabil und schnell. Für den Anwender uninteressante zusätzliche Bildebenen müssen nicht aufgenommen werden, wodurch es Zeitersparnisse auch während der eigentlichen Messung am Mikroskop gibt. Der geringe Rechenaufwand erlaubt die Anpassung der Korrektur auf räumliche Änderungen der Lichtblattdicke als Folge der Streuung und Ablenkung des Lichtblatts im Gewebe. Werden die Faktoren der räumlichen Anpassung indirekt aus den Bilddaten ermittelt, können rekursiv Aussagen über ebendiese räumliche Struktur des Lichtblatts gewonnen werden.

Im Anwendungsfall des Lichtblattmikroskops kann wie beschrieben die dreidimensionale Konvolution zerlegt werden in eine zweidimensionale Konvolution auf der Ebene des Lichtblatts, hervorgerufen durch die Lichtbrechung während der Transmission der fluoreszenten Emission oder Streuung der Anregung durch das Gewebe, und einer eindimensionalen Konvolution, hervorgerufen durch die Dicke des Lichtblattes. Wenn die Lichtblattkonvolution, die durch die Dicke des Lichtblatts in Richtung des Objektivs verursacht wird, zurückgerechnet werden kann, können dann prinzipiell etablierte Dekonvolutionsverfahren für die zweidimensionale Dekonvolution in der Ebene des Lichtblattes angewandt werden.

Gemäß einem Ausführungsbeispiel wird das dreidimensionale Bild in ein neues Koordinatensystem übertragen, indem der Abstand jedes Voxel von der Gewebeoberfläche in Detektionsrichtung umgerechnet wird. Das so transformierte Bild wird dann mit einer gewebetiefenabhängigen psf dekonvolviert.

Die Lichtblattkorrektur, d. h. die Korrektur der Lichtblattdicke bzw. die Dekonvolution in z-Richtung, geht der gewebetiefenabhängigen lateralen Dekonvolution voraus, um ein gleichmäßig beleuchtetes Ausgangsbild mit deutlichen Gewebegrenzen zu generieren. Da die Dekonvolution eine Kenntnis der Gewebetiefe voraussetzt, sind beide Prozessschritte direkt gekoppelt. Empirische Verfahren basierend auf einer Bestimmung des Informationsgehaltes des dekonvolvierten Bildes (etwa eine Kontrastermittlung) werden genutzt, um die Parameter der verwendeten Punktspreizfunktionen zu bestimmen.

Nachfolgend wird ein Lösungsvorschlag für die algebraische Korrektur der Lichtblattdicke, d. h. die Dekonvolution in z-Richtung, gemäß einem Ausführungsbeispiel genauer im Detail beschrieben.

Die Diskretisierung des Konvolutionsvektors in der Dimension normal zur Lichtblattausbreitungsebene bildet ein lineares Gleichungssystem, welches für eine beliebige Anzahl vertikaler Stützstellen gelöst werden kann. Wird das System insofern vereinfacht, dass nur die ersten Stützstellen ober- und unterhalb der Lichtblattmitte berücksichtigt werden, kann das Gleichungssystem als tridiagonale Matrix NxN (mit N der Anzahl der aufgenommenen Ebenen) aufgefasst werden, wofür computativ schnelle Lösungsalgorithmen, zum Beispiel der Thomas-Algorithmus, bekannt sind.

Unter der Voraussetzung, dass die tridiagonale Konvolutionsmatrix positiv definit ist, das heißt alle ihre Eigenwerte reell und positiv sind, ist auch ihre inverse eine tridiagonale Matrix. Dann, und nur dann, ist eine algebraische Korrektur zulässig. Das Resultat ist ein für jede Kombination von Lichtblatt und Messabstand konstanter Faktor, mit dem die jeweiligen Nachbarebenen multipliziert werden müssen, bevor sie von der zu korrigierenden Bildebene abgezogen werden müssen. Dieser Faktor kann einmalig durch Matrixinversion berechnet werden, womit sich die Korrektur bei gleichbleibenden Messbedingungen auf eine einfache, direkte algebraische Gleichung pro Pixel reduziert. Je größer der Ebenenabstand zwischen den Lichtblättern, desto geringer der Betrag des Multiplikationsfaktors, und desto geringer der Bildschärfengewinn durch Anwendung der Korrektur. Die Bedingung der positiven Definitheit kann übersetzt werden in einen minimalen Abstand der Messstellen, also einen minimalen Abstand der vermessenen Bildebenen. Bei kleineren Abständen wird die Matrixinversion instabil, und der oben genannte Fall der inversen psf mit unendlich vielen Einträgen tritt ein.

Anschaulich ist in diesem Zusammenhang die Überlegung, dass benachbarte Bilder bei sehr kleinen Messabständen zu ähnlich sind, um eine Korrektur durch einfaches Subtrahieren der Nachbarn zu erreichen. Der Betrag des Multiplikationsfaktors wird so groß, dass negative Einträge im Ergebnisbild entstehen, die dann durch Addition der nächsten Nachbarebene korrigiert werden müssen. Dies setzt sich über den gesamten Bildstapel fort.

Diese Überlegung zeigt, dass die Eigenschaft der Makroskopie, d. h. der vergleichsweise große (makropkopische) Abstand zwischen den Lichtblattebenen, die die Anwendung etablierter Dekonvolutionsverfahren verhindert, zugleich die Eigenschaft ist, die die Berechnung einer endlichen inversen psf ermöglicht. Zudem kann das Verfahren für jeden Bildpunkt gemäß der Lichtblattdicke angepasst werden, wodurch auch die Inhomogenität der psf kein Problem darstellt. Insbesondere kann der zu Verfügung stehende Rechenaufwand auf eine lokale Anpassung der invertierten Matrix umgelagert werden, weil die Dekonvolution des einzelnen Bildpunktes auf eine einfache Multiplikation und Subtraktion reduziert wird.

Die Umsetzung des Verfahrens erfordert die Bestimmung eines Korrekturfaktors f1, auf die im folgenden Abschnitt anhand von Ausführungsbeispielen näher eingegangen wird. Ist dieser Faktor bestimmt, können verschiedene Eigenschaften des korrigierten Bildes im Frequenzraum untersucht werden.

Der Effekt des Ansatzes der Korrektur durch Abziehen lediglich des nächsten Nachbarn unter Verwendung eines Korrekturfaktors wird nun anhand einer Simulation im Detail näher erläutert. Dies dient dazu, den Effekt der Subtraktion des unmittelbaren Nachbarn mittels eines Korrekturfakturs für zufällig erzeugte Bilder zu zeigen. Hierzu wurden zufällig "eindimensionale" Bilder, d. h. zufällige Intensitätswerte erzeugt, um ein zufälliges "eindimensionales Bild" mit 500 Pixeln zu erzeugen. Ausgehend hiervon wurde dann die Korrektur vorgenommen, bei der der mit dem Korrekturfaktor f1 multiplizierte benachbarte Intensitätswert subtrahiert wird, so wie dies im Fall der tridiagonalen Dekonvolutionsmatrix der Fall ist.

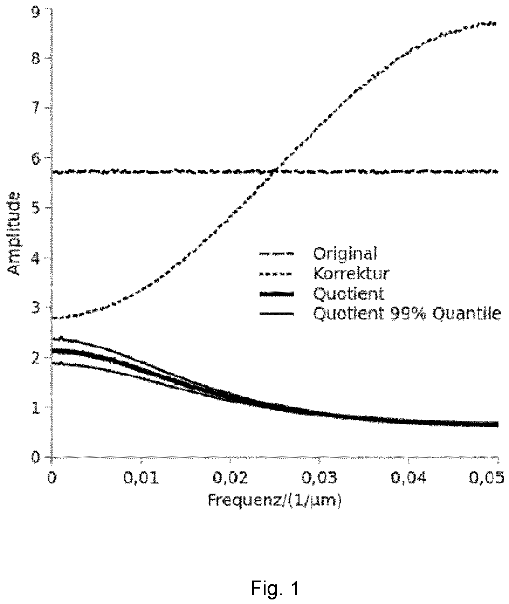

Für die Graphen in Fig. 1 wurde dabei f1 zu 0,26 angenommen und die algebraische Korrektur auf zufällig generierte eindimensionale Datensätze (je 500 "Pixel") angewandt.

Diese Simulation wurde einhunderttausend Mal wiederholt. Fig. 1 zeigt die gemittelten Amplituden im Frequenzraum (d. h. nach Fouriertransformation) des Zufallsdatensatzes vor ("Original") und nach der Korrektur durch Subtraktion der mit dem Korrekturfaktor multiplizierten Nachbarn. Zudem ist der Quotient des ursprünglichen und korrigierten Amplitudenverlaufs dargestellt. Dieser entspräche in einer klassischen Dekonvolution der psf im Frequenzraum. Um einen Eindruck über die Varianz innerhalb der Simulationen zu bekommen, wurden auch die 99%-Quantilen des Quotienten dargestellt.

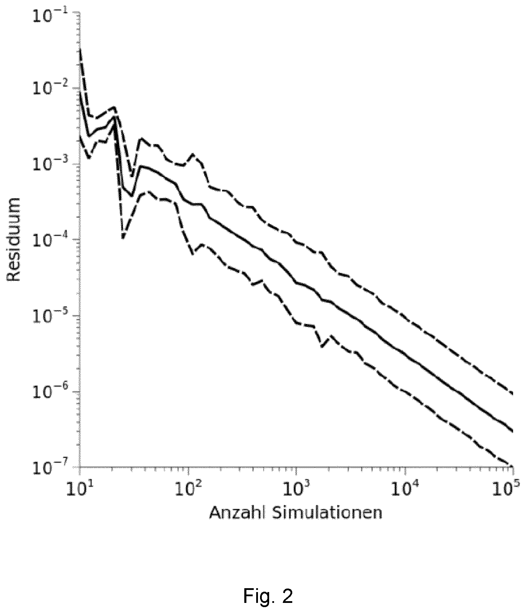

Die Änderung des mittleren Quotienten im Laufe der Simulation ist in Form des Residuums in Fig. 2 dargestellt. Sie zeigt das Residuum der Simulation mit Standardabweichung als Verhältnis der Änderung der mittleren Amplitude der Quotientfunktion (bei Hinzufügen einer Simulation) zur neu berechneten mittleren Amplitude über alle Simulationen.

Die ursprünglich 100 000 Datenpunkte wurden lokal (entlang einer logarithmischen Skala) gemittelt und so auf 50 Datenpunkte reduziert, plus einem zusätzlichen Datenpunkt für die zehn ersten Simulationen. Auf gleiche Weise wurde die dargestellte laufende Standardabweichung berechnet. Für das Residuum selbst wurde der Verlauf der gemittelten Amplituden des Quotienten vor und nach Hinzufügen eines neuen simulierten Datenpunktes miteinander verglichen. Nach 100 000 Simulationen ändert sich die Quotientenfunktion im Mittel um weniger als ein $10^{-6}$-tel ihres eigenen Mittelwertes.

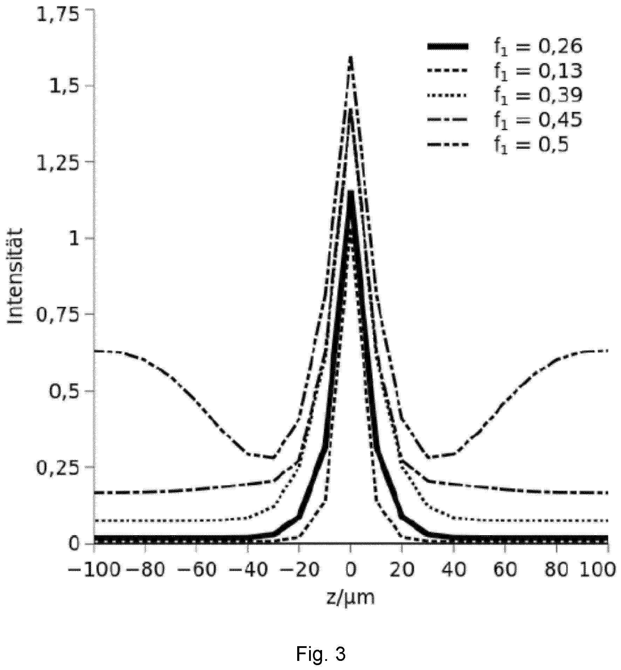

Für Fig. 1 und Fig. 2 wurden nur die Beträge des Frequenzraumes genutzt. Erhält man die komplexen Komponenten, also auch die Phase, bei der Berechnung des Quotienten, so kann diese neue komplexe Frequenzraumfunktion zu einer reellen Funktion im Intensitätsraum invertiert werden. Da sowohl die Ursprungsfunktion als auch die korrigierte Funktion im Intensitätsraum reell sind, haben ihre Entsprechungen im Frequenzraum komplex-konjugierte Einträge. Deren Quotient bleibt somit komplexkonjugiert und die Inverse (im Intensitätsraum) wird wieder reell (abgesehen von numerischen Rundungsfehlern). Diese Funktion ist in Fig. 3 dargestellt. Sie zeigt Fourier-Inverse der simulierten mittleren Quotientenfunktion aus Fig. 1 (f1=0,26) und für weitere Korrekturparameter im Frequenzraum.

Angenommen wurde hierbei ein Abstand von 10 μm zwischen zwei Bildern im Bildstapel, entsprechend ist das die Auflösung in der Darstellung. Der gezeigten Verteilung kann, durch lineare Interpolation zwischen den Datenpunkten, eine Halbwertsbreite von 13,8 μm zugeordnet werden. Wird statt 0,26 ein anderer Korrekturwert genutzt, ergibt sich eine andere Halbwertsbreite, wie ebenfalls dargestellt.

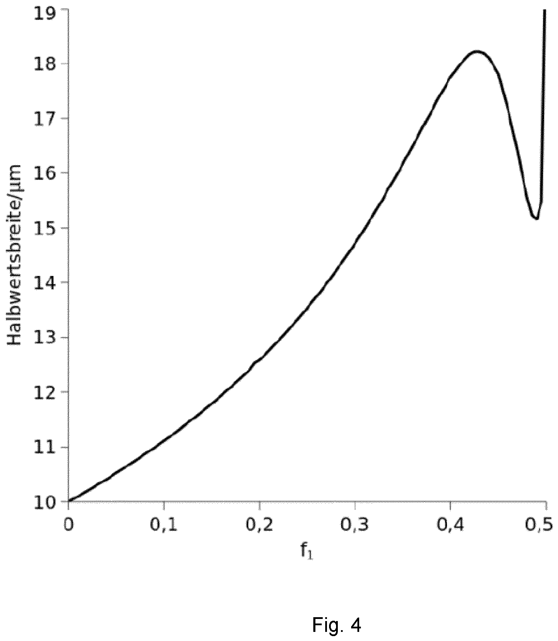

Für verschiedene Faktoren f1 wurden die jeweiligen Halbwertsbreiten berechnet, diese sind aufgetragen in Fig. 4. Wie zu erwarten steigt die Halbwertsbreite mit zunehmendem Korrekturfaktor f1, bis bei f1 = 0,43 ein lokales Maximum von 18,2 μm Halbwertsbreite erreicht wird. Danach ändert sich die Funktion um 0 μm nicht mehr, stattdessen steigt der Offsetwert in der Peripherie (siehe Fig. 3). Ungefähr bei f1 = 0,49 steigen die Halbwertsbreiten wieder an, es bilden sich weitere lokale Maxima in der Quotientenfunktion aus. Die mathematische Grenze der stabilen Invertierbarkeit ist erreicht.

Aus der Simulation lässt sich jedoch erkennen, dass der Ansatz der Subtraktion des nächsten Nachbarn unter Verwendung eines Korrekturfaktors grundsätzlich geeignet ist zur stabilen Dekonvolution, solange der Abstand der Ebenen groß genug gegenüber der Halbwertsbreite der Punktspreizfunktion ist, beispielsweise mindestens so groß ist wie die Halbwertsbreite der Punktspreizfunktion. Dies ist bei der makroskopischen Lichtblattmikroskopie der Fall, weshalb sich dieses Verfahren für die Dekonvolution in z-Richtung, d.h. die Lichtblattdickenkorrektur, anwenden lässt.

Erforderlich für die Anwendung ist jedoch die Auswahl bzw. Bestimmung des Korrekturfaktors f1. Diese empirische Bestimmung des lokalen (gewebetiefenabhängigen) Korrekturfaktors wird nachfolgend anhand eines Ausführungsbeispiels genauer beschrieben.

Die Lichtblattdicke vor dem Eintritt in und nach dem Austritt aus dem Gewebe kann experimentell direkt bestimmt werden. Die experimentelle Bestimmung der Lichtblattdicke vor Eintritt und nach Austritt aus dem Gewebe kann genutzt werden, um die Ansatzfunktion für f_1 nach unten und oben einzuschränken, wodurch die empirische Bestimmung der Funktion verbessert werden kann. Der lokale Verlauf der Aufweitung des Lichtblatts innerhalb des Gewebes ist jedoch nicht trivial und nicht ohne weiteres bestimmbar. Gleiches gilt für eine mögliche Ablenkung des Lichtblatts aus der ursprünglichen Belichtungsebene hinaus.

Ausgehend von einer vorliegenden makroskopischen Lichtblattmessung wird gemäß einem Ausführungsbeispiel die lokale Aufweitung des Lichtblattes empirisch ermittelt. Die erste Annahme ist dabei, dass eine Aufweitung nur innerhalb des Gewebes stattfindet. Ein globales Thresholding-Verfahren (z. B. Otsu) wird dann verwendet, um zwischen Gewebe und Hintergrund zu unterscheiden. Somit ist es möglich, jedem Pixel innerhalb des Gewebes eine lokale Gewebetiefe in Ausbreitungsrichtung des Lichtblatts zuzuordnen.

Zur Modellierung der Aufweitung des Lichtblatts im Gewebe wird gemäß einem Ausführungsbeispiel eine monoton steigende Funktion verwendet, die positive Werte für alle Gewebetiefen liefert.

Daneben ist es vorteilhaft, wenn nicht mehr als ein oder zwei empirisch zu bestimmende Parameter genutzt werden, um den Rechenaufwand zu begrenzen. Zum Beispiel kann eine Potenzfunktion folgender Gestalt genutzt werden:

$$f_1(x_T) = \frac{1}{2} - \frac{1}{x_T^{\,n}}$$

Hierbei ist f1 der benötigte Korrekturfaktor, also der Wert, mit dem die benachbarten Ebenen multipliziert werden, bevor sie von der zu korrigierenden Ebene abgezogen werden, $X_T$ ist die Gewebetiefe in Pixel und n ist die bisher unbekannte Potenz. Die beschriebene Funktion strebt (für n > 0) mit steigender Gewebetiefe $X_T$ gegen den theoretischen maximalen Korrekturwert von 0,5. Um negative f1 zu vermeiden, wird die Funktion für kleine $X_T$ auf den Korrekturwert des ungestörten Lichtblatts in Gewebe $f_{1,0}$ gesetzt. Dieser kann empirisch bestimmt werden, indem die Korrektur mit verschiedenen Werten für $f_{1,0}$ am dem Lichtblatt zugewandten Geweberand durchgeführt wird. Der Wert $f_{1,0}$ der den höchsten Bildkontrast (oder subjektiv besten Bildeindruck) liefert, wird als Parameter ausgewählt. Die untere Grenze der Gewebetiefe $X_{T,0}$ bei bekannter ungestörter Lichtblattdicke $f_{1,0}$ (im vorliegenden Beispiel 0,26) berechnet sich aus obiger Gleichung zu:

$$x_{T,0} = \frac{1}{\sqrt[n]{\frac{1}{2} - f_{1,0}}}$$

Nach jeder Korrektur wird der Kontrast im Bildvordergrund als Standardabweichung der korrigierten Intensitäten des Bildvordergrunds, bezogen auf die mittlere Intensität, berechnet (vgl. PELI, Eli. Contrast in complex images. JOSA A, 1990, 7. Jg., Nr. 10, S. 2032-2040). Zur Demonstration wurde das Verfahren auf eine Lichtblattvermessung eines humanen Appendix angewandt, dieser wurde zuvor optisch gecleart, und zwar mit einem Verfahren wie beschrieben in DE 102016123458 B3.

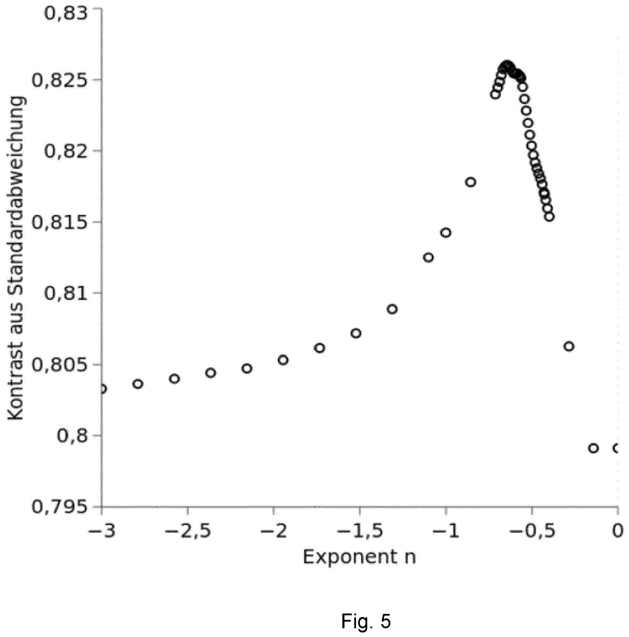

Es ergibt sich der in Fig. 5 dargestellte Verlauf des Kontrastwertes als Funktion des Exponenten der Korrekturfunktion. Der optimale Gesamtkontrast wird hier bei einem Exponenten von -0,65 erreicht.

Das beschriebene Verfahren kann prinzipiell beliebig variiert und erweitert werden, indem ein anderes Kriterium zur Bildqualität (statt des Kontrastes oder mit einer anderen Definition des Bildkontrastes) oder eine andere Ansatzfunktion für den gewebetiefenabhängigen Korrekturfaktor verwendet wird. Zudem kann die Anzahl der freien Variablen erhöht werden. Indem unterschiedliche Korrekturfaktoren über und unter dem Bild angenommen werden, kann eine Ablenkung des Lichtblattes von der Belichtungsebene weg abgebildet werden. Gemäß einem Ausführungsbeispiel kann dann dabei die Nutzung eines numerisch-iterativen Verfahrens zur Lösung nichtlinearer Minimierungsprobleme, zum Beispiel das Gauß-Newton-Verfahren, mit dem verbundenen erhöhten Berechnungsaufwand, verwendet werden.

Ist die Korrekturfunktion einmal ermittelt, so kann für mehrere Lichtblattmessungen mit gleichen Gewebetypen und Clearingprotokollen immer dieselbe, einmal bestimmte Korrekturfunktion genutzt werden.

Nach der Beschreibung der Dekonvolution in z-Richtung wird nachfolgend die gewebetiefenabhängige Dekonvolution senkrecht zur Objektivachse gemäß einem Ausführungsbeispiel genauer beschrieben.

Nachdem die Korrektur der Lichtblattdicke für alle Ebenen im Bildstapel durchgeführt wurde, erfolgt die "eigentliche Dekonvolution", d. h. die Dekonvolution in lateraler Richtung (in der x/y-Ebene). Durch die Trennung zwischen axialer und lateraler psf (Lichtblattdicke und Streuung bei Transmission durch das Gewebe) verbleibt nach der Korrektur der Lichtblattdicke eine zweidimensionale psf.

Die Ausdehnung dieser psf ist abhängig von der Lichtweglänge zwischen dem Ursprungspunkt der Emission und der Gewebegrenze in Richtung des Objektives, im Falle eines Lichtblattmikroskops also senkrecht zur Belichtungsebene. Eine experimentelle Bestimmung dieser psf mit fluoreszenten Beads erlaubt die Ermittlung der Form der psf, nicht jedoch ihrer Größe im realen Gewebe.

Ähnlich wie im Fall der des eindringtiefenabhängigen Korrekturfaktors für die Lichtblattkorrektur wird gemäß einem Ausführungsbeispiel die Ausdehnung der psf gewebetiefenabhängig bestimmt. Analog zum oben beschriebenen Vorgehen wird jedem Voxel innerhalb des Gewebes eine Gewebetiefe zugeordnet, jetzt in axialer (z-)Richtung statt in Richtung der Ausbreitung des Lichtblatts. Als Ansatzfunktion des psf-Radius rpsf dient gemäß einem Ausführungsbeispiel wieder eine Potenzfunktion.

Monte-Carlo-Simulationen der Streuung innerhalb von Geweben zeigten, dass sich Lichtbündel mit zunehmender Gewebetiefe monoton steigend aufweiten, der Anstieg dieser Aufweitung jedoch stetig abfällt (vgl. FLOCK, Stephen T., et al. Monte Carlo modeling of light propagation in highly scattering tissues. I. Model predictions and comparison with diffusion theory. IEEE Transactions on Biomedical Engineering, 1989, 36. Jg., Nr. 12, S. 1162-1168). Eine Potenzfunktion mit einem Exponenten $0 < n < 1$ erfüllt diese Bedingung.

$$r_{psf} = \left( k \, \frac{z_T}{\Delta z} \right)^n$$

In obiger Gleichung bezeichnet $z_T$ die lokale Gewebetiefe und $\Delta z$ die Bildauflösung in axialer Richtung. Sie erlaubt somit, bei Kenntnis des Exponenten n, die Berechnung der Aufweitung der psf. Der konstante Normierungsfaktor k dient der Skalierung des psf-Radius und kann zunächst beliebig gewählt werden. Im hier gezeigten Beispiel wurde k =0,5 gesetzt. Er kann auf Basis der empirischen Bestimmung des Exponenten n korrigiert werden, was nachfolgend Stelle beschrieben wird.

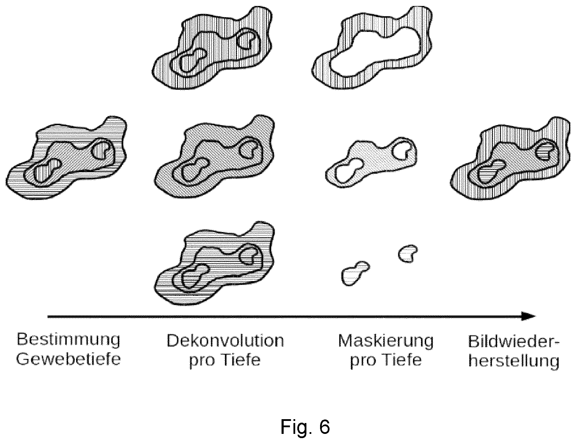

Zur Umsetzung dieses lokalen Dekonvolutionsverfahrens wird das Bild auf jeder Ebene in drei bis fünf Gebiete ähnlicher Gewebetiefe aufgeteilt. Die lokale psf wird dann als Airy-Funktion mit dem tiefenabhängigen Radius für jedes Gebiet berechnet. Der Radius rpsf entspricht hierbei der Position der ersten Nullstelle der Airy-Funktion. Die Dekonvolution wird dann durch Nutzung des Richardson-Lucy-Algorithmus für jede psf für das gesamte Bild durchgeführt. Man erhält so bei fünf Gebieten fünf dekonvolvierte Bilder. Diese werden jeweils maskiert (als Masken dienen die bestimmten Gebiete ähnlicher Tiefe) und zum dekonvolvierten Gesamtbild zusammen gesetzt. Dieser Prozess wird für jedes Bild im Bildstapel durchgeführt. Zur Veranschaulichung ist die gesamte beschriebene Prozedur in Fig. 6 dargestellt.

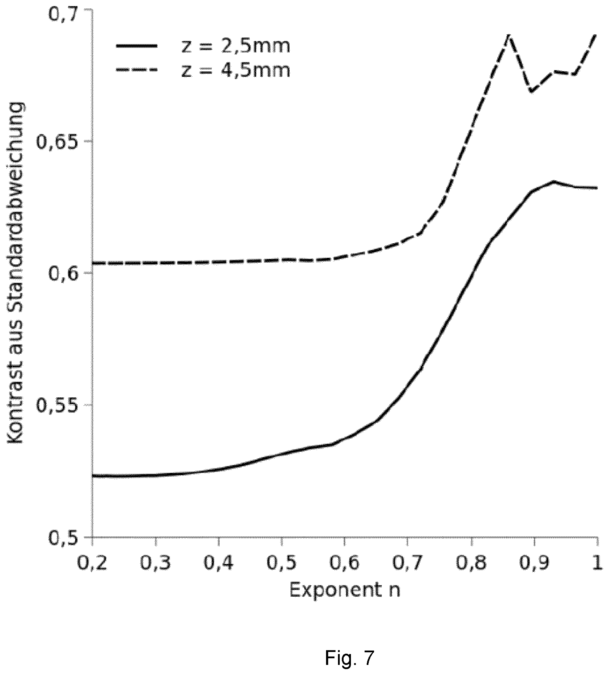

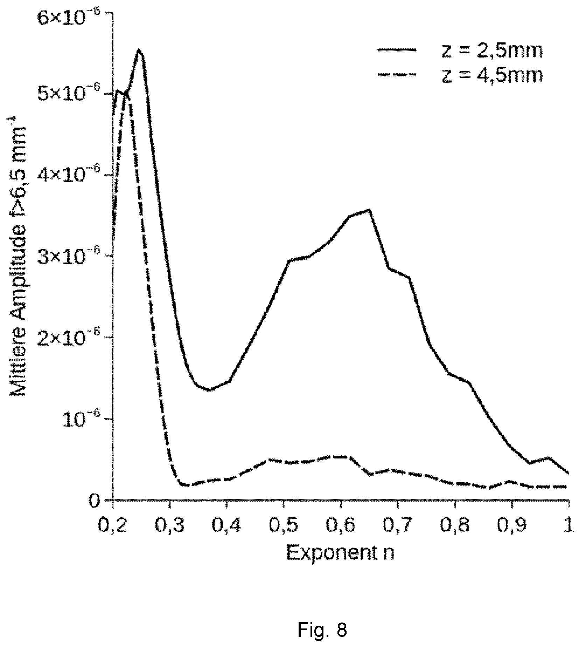

Der Wert des Korrekturexponenten n ist abhängig von den optischen Eigenschaften des zu untersuchenden Gewebes unter der gegebenen Anregungs- bzw. Emissionswellenlänge. Wie Fig. 7 zeigt, steigt der Bildkontrast im Sinne der Standardabweichung der Intensitäten im Gewebe mit n. Eine zu "große" psf führt jedoch zu Ringartefakten im Bild, sichtbar durch einen Anstieg der Amplituden hoher räumlicher Frequenzen (vgl. Fig. 8).

Ein Exponent n = 0,37 zeigt bei gecleartem, lymphatischen Gewebe noch keine Ringartefakte in den beiden betrachteten Bildebenen und wird daher im vorliegenden Ausführungsbeispiel für die Dekonvolution genutzt.

Wenn für keinen Exponenten n ein dekonvolviertes Bild ohne Ringartefakte generiert werden kann, wird vorzugsweise der Normierungsfaktor k nach unten korrigiert. Zeigt sich im Frequenzkontrast ein breites Plateau geringer Amplituden über weite Strecken von n, kann k erhöht werden. In beiden Fällen wird dann die empirische Bestimmung von n wiederholt.

Der komplette Algorithmus zur Korrektur und Kontrasterhöhung von Lichtblattmessungen besteht gemäß einem Ausführungsbeispiel aus sechs Einzelschritten: Bestimmung einer globalen Thresholdintensität, Tiefpassfilterung, lokale Lichtblattkorrektur, gewebetiefenabhängige Dekonvolution und Anpassung der Intensitätsverteilung entlang des Lichtblatts.

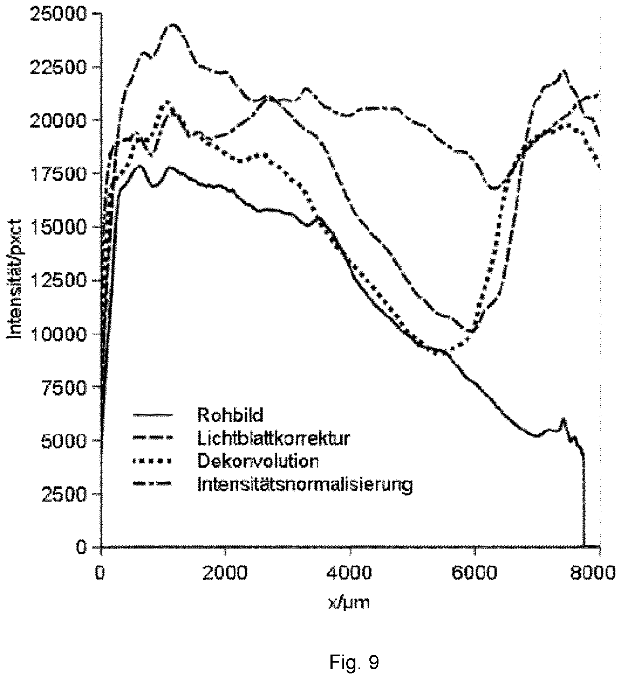

In den Fig. 9 bis 12 sind mittlere Intensität und Kontrast (als Standardabweichung der Intensität) entlang des Lichtblatts für die wichtigsten Prozessschritte anhand zweier beispielhafter Gewebe dargestellt. Jeder Datenpunkt repräsentiert dabei die Menge aller Punkte innerhalb des Gewebes, die den gleichen Abstand vom Geweberand in der Ausbreitungsrichtung des Lichtblattes haben. Der Intensitätsverlauf des Appendix in Fig. 9 zeigt einen Einbruch zwischen 4mm und 6mm Gewebetiefe nach Anwendung der Lichtblattkorrektur. Ursache ist das Darmlumen eines Appendix in der Mitte des Gewebes.

Die Berechnung der globalen Thresholdintensität erfolgt gemäß einem Ausführungsbeispiel in zwei Schritten. Zunächst wird eine Mittelwert-z-Projektion entlang der Objektivachse berechnet. Dann wird auf diesem Ergebnisbild ein globales Otsu-Threshold-Verfahren angewandt. Der errechnete Threshold-Wert wird dann mit einem Sicherheitsfaktor von 0,6 nach unten korrigiert.

Der Tiefpassfilter ist eine ideale FFT-Filterung mit einer kreisförmigen Maske, die die 20% höchsten räumlichen Frequenzen im Bild zu Null setzt. Anschließend erfolgen die Lichtblattkorrektur und die gewebetiefenabhängige Dekonvolution, wie sie oben beschrieben wurde.

Durch Absorption und Streuung sinkt die Anregungsintensität mit steigendem Abstand vom Lichtblattursprung. Daher werden nach der Lichtblattkorrektur die Intensitäten entlang des Lichtblatts angepasst. Für jedes Bild im Stapel wird die mittlere Intensität als Funktion der Gewebetiefe berechnet. Die Zuordnung von Voxel zu Gewebetiefe erfolgt analog der obigen Beschreibung für die Lichtblattkorrektur und die Dekonvolution, in diesem Fall in Ausbreitungsrichtung des Lichtblatts. Die einzelnen Voxel im Gewebe werden dann durch die eben bestimmte mittlere Intensität im Gewebe dividiert. Anschließend wird das gesamte Einzelbild in die Größenordnung der gewünschten Bildtiefe (z.B. 8-Bit oder 16-Bit) zurück normiert.

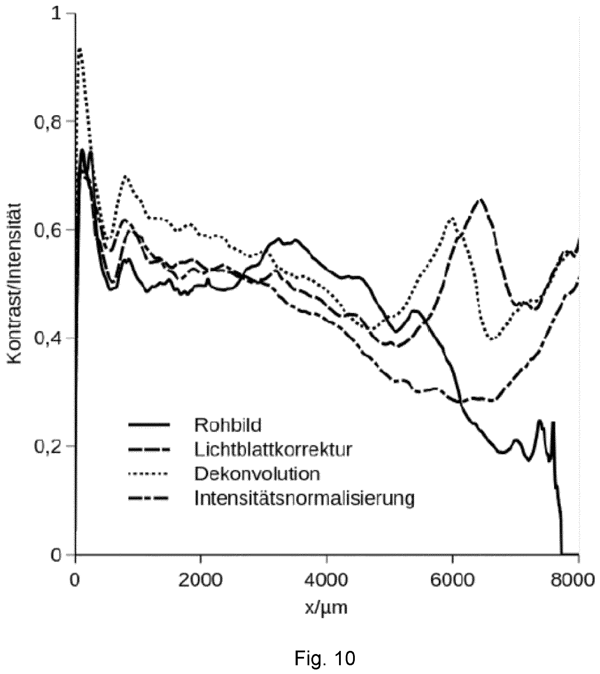

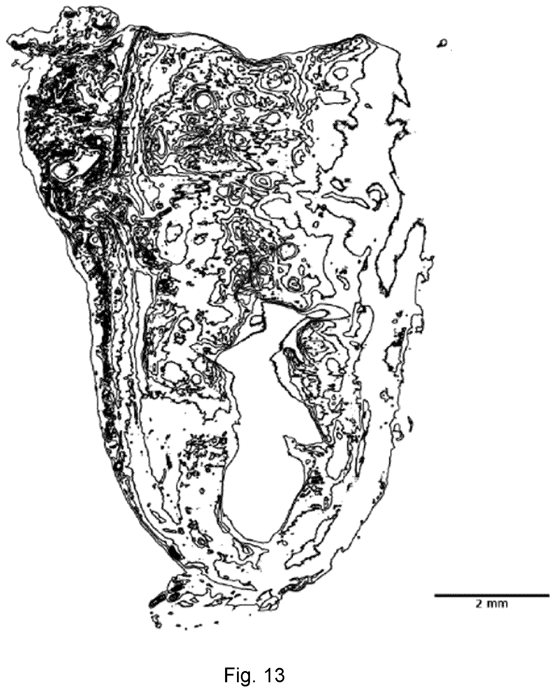

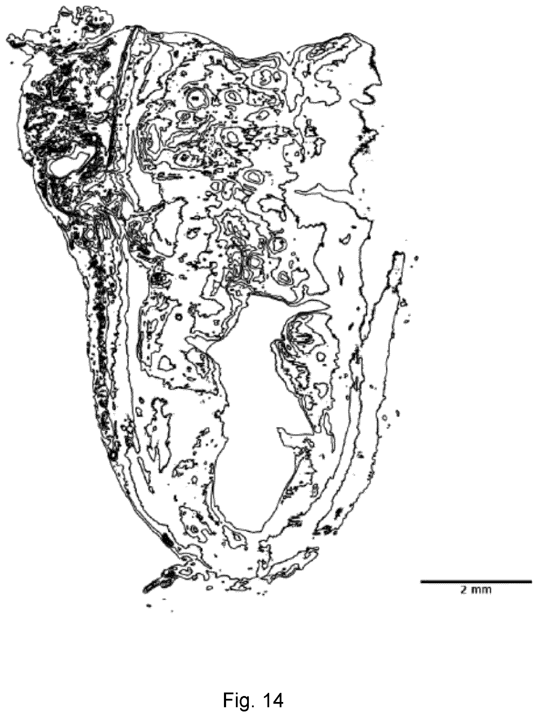

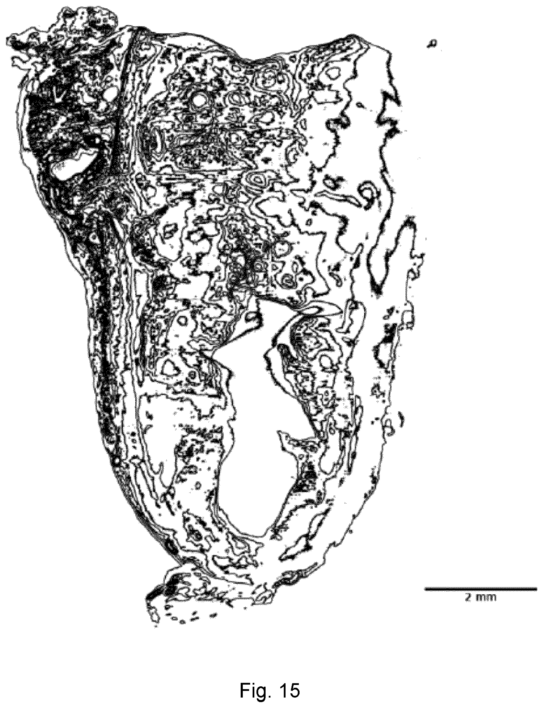

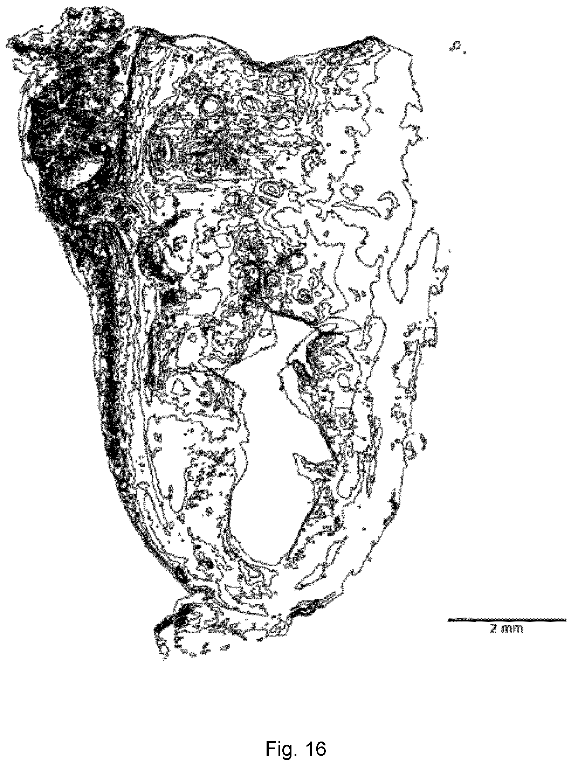

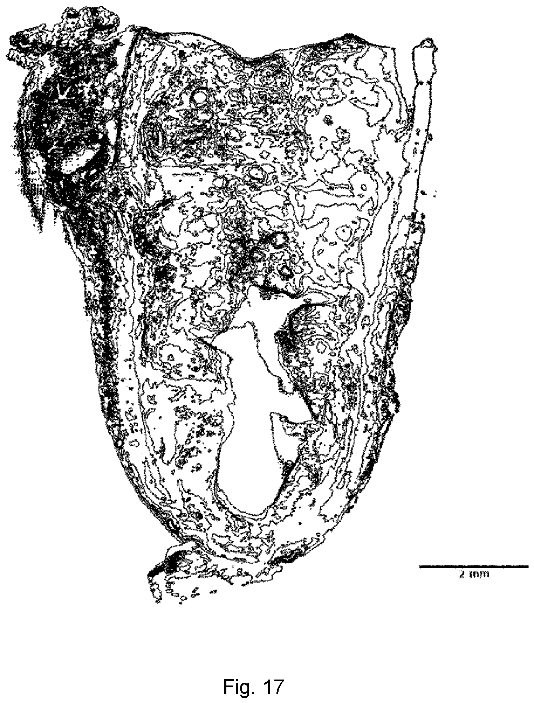

Für die Fig. 13 bis 17 wurden Lichtblattaufnahmen einer Einzelebene nach den jeweiligen Bearbeitungsschritten, also Originalaufnahme, Fourier-Filterung, Korrektur der Lichtblattdicke, laterale Dekonvolution und Intensitätsanpassung, beispielhaft dargestellt. Dem dargestellten Gewebe entstammen auch die Kurven in Fig. 9 und 10. Die Effekte der einzelnen Bearbeitungsschritte werden dabei deutlich. Die Lichtblattkorrektur fügt dem Einzelbild neue Information hinzu, so dass neue Strukturen sichtbar werden. Die gewebetiefenabhängige Dekonvolution bildet diese neuen Strukturen schärfer ab. Die Angleichung der Intensitätsverteilung hebt tief im Gewebe liegende Bildteile stärker hervor.

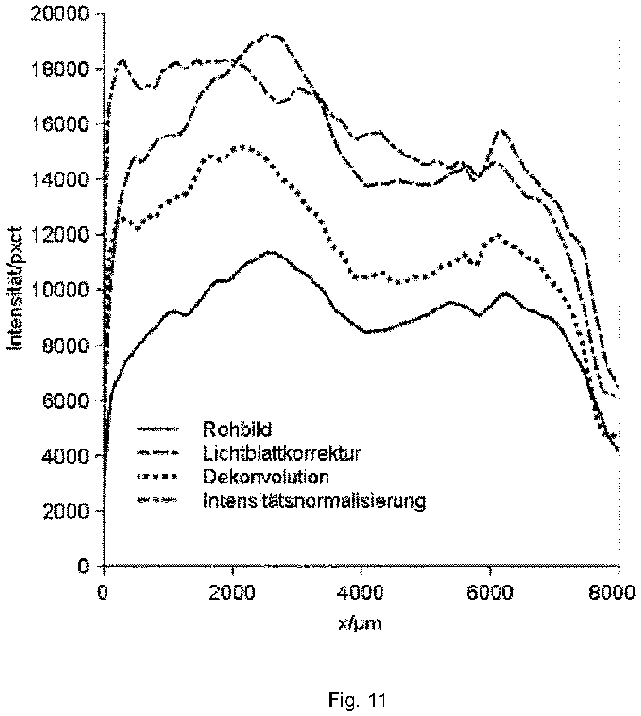

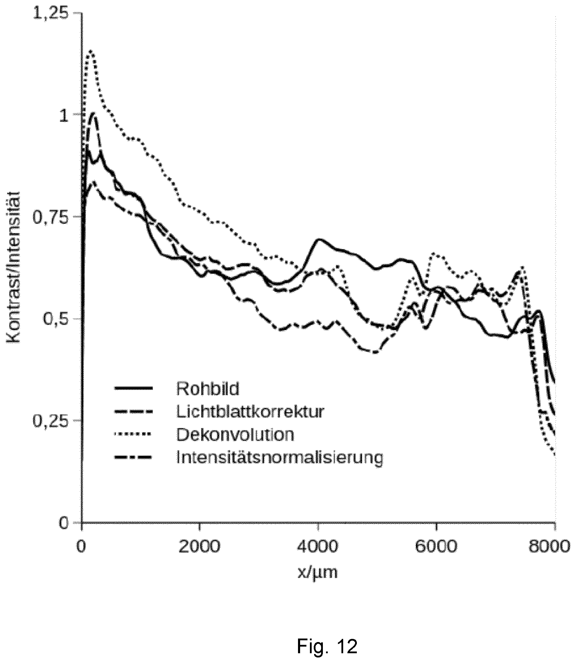

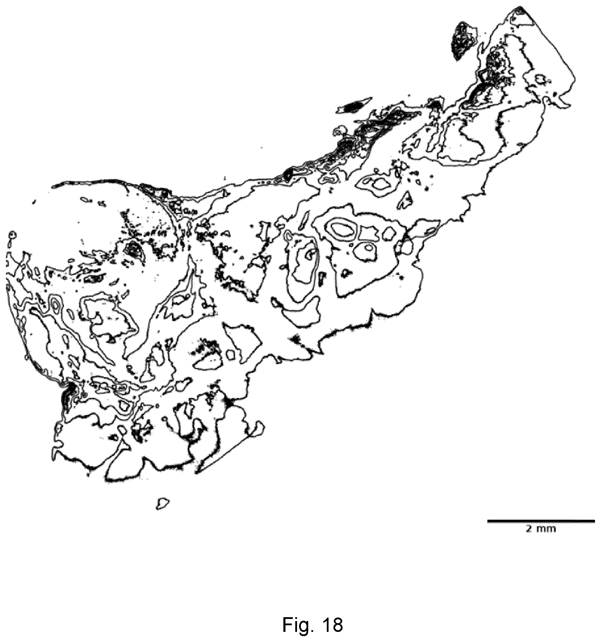

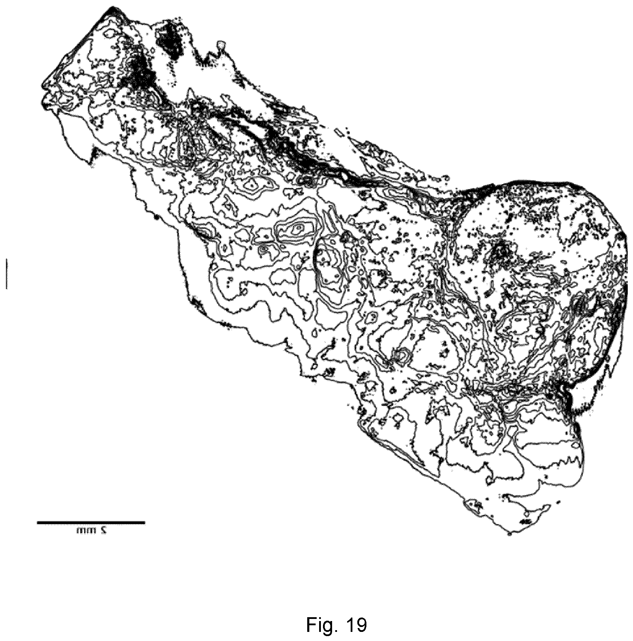

Als ein weiteres Beispiel vergleichen Fig. 18 und Fig. 19 eine Lichtblattmikroskopieaufnahme eines humanen Thymus vor und nach der gesamten beschrieben Prozedur. Dieser Gewebeaufnahme entstammen auch die Kurven für Fig. 11 und 12. Die 16Bit-Graustufenbilder wurden dazu in Konturdiagramme mit je zehn Iso-Linien gleicher Intensität umgerechnet.

Der Fachmann erkennt, dass die beschriebenen Verfahren zur Kontrastverbesserung mittels eines Computerprogramms, das auf einem handelsüblichen Computer abläuft, implementiert werden können. Auf Grundlage der vorgehenden Beschreibung ist es dem Fachmann ohne weiteres möglich, ein entsprechendes Computerprogramm zu entwerfen. Hierzu werden die Bilddaten, d. h. die Intensitäten der Voxel des Lichtblattmikroskopbildes, den beschriebenen mathematischen Operationen unterzogen, die mittels eines entsprechen Computerprogramms implementiert werden.

Bei dem mittels der beschriebenen Verfahren bearbeiteten Bild handelt es sich um eine technische Entität, bei der Kontrastverbesserung eines Bildes, insbesondere eines Mikroskopbildes, handelt es sich um einen technischen Effekt bzw. um die Lösung eines technischen Problems, das durch die in den Ausführungsbeispielen beschriebenen sowie durch die in den Ansprüchen definierten Verfahren auf neue, nicht naheliegende Weise gelöst wird.

**Patentansprüche**

1. Verfahren zur Kontrasterhöhung eines dreidimensionalen Lichtblattmikroskopiebildes, das aus N einzelnen jeweils einer Lichtblattebene entsprechenden Bildern gebildet wird, die in z-Richtung in mindestens einem Abstand d voneinander beabstandet sind, wobei die x/y-Ebene die Lichtblattebene und die z-Richtung die Ausbreitungsrichtung des Lichtblatts der Lichtblattebene ist, aufweisend:

> Dekonvolution des dreidimensionalen Bildes in z-Richtung, umfassend: Für jeden Intensitätsvektor aus N Intensitäten $(I_{x,y,1}, \ldots , I_{x,y,N})$ mit gleichem x/y-Wert, Multiplikation mit einer tridiagonalen N X N Dekonvolutionsmatrix, die jedem Voxel (x, y, n) einen Korrekturparameter f1 zuordnet, mit dem durch die Multiplikation der Dekonvolutionsmatrix mit dem Intensitätsvektor $(I_{x,y,1},\ldots,I_{x,y,N})$ für eine Komponente I(x, y, n) des Intensitätsvektors die Intensitäten I(x, y, n+1) und I(x, y, n-1) der entsprechenden Voxel der benachbarten Bildebenen multipliziert werden, bevor sie vom Intensitätswert I(x, y,n) abgezogen werden,
> wobei der Abstand zwischen zwei Lichtblattebenen größer ist als die Halbwertsbreite der Punktspreizfunktion in z-Richtung.

2. Verfahren nach Anspruch 1, wobei der Korrekturfaktor f1 mit zunehmender Eindringtiefe des Lichtblatts in das Gewebe in x-Richtung größer gewählt wird.

3. Verfahren nach Anspruch 1 oder 2, ferner aufweisend:
Ermittlung des Korrekturfaktors f1 am Eindringort des Lichtblatts in das Gewebe durch:

> Berechnen der Dekonvolution sowie eines Qualitätsmaßes des dekonvolierten Bildes basierend auf unterschiedlichen Korrekturparametern f1 für einen Ausschnitts des Geamtbildes, der ausgehend vom Eindringort des Lichtblatts die ersten k Voxel in x-Richtung umfasst, wobei k klein ist gegen die Ausdehnung des Bildes in x-Richtung, und
> Wahl desjenigen Korrekturparameters f1, für den das berechnete Qualitätsmaß der größten Qualitätsverbesserung entspricht.

4. Verfahren nach einem der vorhergehenden Ansprüche, ferner aufweisend:

> Repräsentation der Abhängigkeit des Korrekturwerts f1 von der Eindringtiefe in x-Richtung durch eine monoton steigende Funktion des Korrekturwerts f1(x);
> Berechnung, für unterschiedliche Funktionen f1(x), der jeweiligen Dekonvolution in z-Richtung des Gesamtbildes sowie eines Qualitätsmaßes des dekonvolvierten Gesamtbildes,
> Auswahl derjenigen Funktion f1(x), die das beste Qualitätsmaß liefert, als Funktion zur Repräsentation des eintrittstiefenabhängigen Korrekturwerts f1(x).

5. Verfahren nach einem der vorhergehenden Ansprüche, ferner aufweisend:
Dekonvolution des Bildes in der x/y-Ebene für jede Bildebene unter Verwendung einer zweidimensionalen Punktspreizfunktion, deren Radius von der Gewebetiefe des zu dekonvolvierenden Voxels in z-Richtung abhängt.

6. Verfahren nach Anspruch 5, aufweisend:

Für jede Bildebene, Durchführen der zweidimensionalen Dekonvolution für unterschiedliche Punktspreizfunktionen die gewebetiefenabhängig sind;
Berechnen eines Qualitätsmaßes für das dekonvolvierte Bild,
Auswahl einer gewebetiefenabhängigen Punktspreizfunktion, die zu einem verbesserten Kontrastwert führt, aus der Mehrzahl von Punktspreizfunktionen, für die die Dekonvolution berechnet wurde.

7. Verfahren nach Anspruch 6, wobei
für die gewebetiefenabhängige Punktspreizfunktion eine Funktion verwendet wird, deren Radius mit zunehmender Gewebetiefe ansteigt, wobei vorzugsweise der Anstieg der Radiusvergrößerung jedoch stetig abfällt.

8. Verfahren nach einem der Ansprüche 5 bis 7, wobei
als Punktspreizfunktion eine Funktion gewählt wird, für die die mittlere Amplitude der hohen Raumfrequenzen, die jenseits eines Raumfrequenzschwellwerts liegen, ein Minimum beträgt oder von einem Minimum nicht mehr als einen vorbestimmten Schwellwert abweicht.

9. Computerprogramm aufweisend Computerprogrammcode, der, wenn er von einem Computer ausgeführt wird, diesen veranlasst, ein Verfahren gemäß einem der Ansprüche 1 bis 8 auszuführen.

**Claims**

1. A method of contrast enhancement of a three-dimensional light sheet microscopy image formed from N individual images each corresponding to a light sheet plane and spaced apart from each other in the z-direction by at least a distance d, the x/y-plane being the light sheet plane and the z-direction being the propagation direction of the light sheet of the light sheet plane, comprising:

Deconvolution of the three-dimensional image in the z-direction, comprising: For each intensity vector of N intensities $(I_{x,y,1}, ... , I_{x,y,N})$ having the same x/y value, performing a multiplication with a tridiagonal N X N deconvolution matrix, which assigns to each voxel (x, y, n) a correction parameter f1, with which, by the multiplication of the deconvolution matrix with the intensity vector $(I_{x,y,1}, ... , I_{x,y,N})$, for a component I(x, y, n) of the intensity vector the intensities I(x, y,n+1) and I(x, y,n-1) of the corresponding voxels of the neighboring image plane are multiplied, before they are subtracted from the intensity value I(x, y,n),
wherein the distance between two light sheet planes is larger than the half-width of the point spread function in the z-direction.

2. The method of claim 1, wherein
the correction factor f1 is selected to be larger with increasing penetration depth of the light sheet into the tissue in the x-direction.

3. The method of claim 1 or 2, further comprising:
Determining the correction factor f1 at the point of entry of the light sheet into the tissue by:

calculating the deconvolution as well as a quality measure of the deconvolved image based on different correction parameters f1 for a section of the whole image comprising the first k voxels in x-direction starting from the penetration location of the light sheet, where k is small compared to the extent of the image in x-direction, and choosing the correction parameter f1 for which the calculated quality measure corresponds to the largest quality improvement.

4. The method of any one of the preceding claims, further comprising:

Representing the dependence of the correction value f1 on the penetration depth in the x-direction by a monotonically increasing function of the correction value f1(x);
calculating, for different functions f1(x), the respective deconvolution in z-direction of the whole image as well as a quality measure of the deconvolved whole image,
selection of that function f1(x), which provides the best quality measure, as a function to represent the entry depth dependent correction value f1(x).

5. The method according to any one of the preceding claims, further comprising:
Deconvolving the image in the x/y plane for each image plane using a two-dimensional point spread function whose radius depends on the tissue depth of the voxel to be deconvolved in the z-direction.

6. The method of claim 5, comprising:

For each image plane, performing the two-dimensional deconvolution for different point spread functions that are tissue depth dependent;
computing a quality measure for the deconvolved image,
selecting a tissue depth dependent point spread function that leads to an improved contrast value from the plurality of point spread functions for which the deconvolution has been computed.

7. The method of claim 6, wherein
for the tissue depth-dependent point spread function, a function is used the radius of which increases with increasing tissue depth, whereby, however, preferably the increase of the radius increase decreases steadily.

8. The method of one of claims 5 to 7, wherein as the point spread function a function is chosen for which the average amplitude of the high spatial frequencies lying beyond a spatial frequency threshold is a minimum or does not deviate from a minimum by more than a predetermined threshold value.

9. A computer program comprising computer program code which, when executed by a computer, causes the computer to perform a method according to any one of claims 1 to 8.

**Revendications**

1. Procédé d'augmentation du contraste d'une image tridimensionnelle de microscopie à feuillet de lumière, qui est formée de N images individuelles correspondant chacune à un plan de feuillet de lumière, qui sont espacées les unes des autres dans la direction z d'au moins une distance d, le plan x/y étant le plan de feuillet de lumière et la direction z étant la direction de propagation du feuillet de lumière du plan de feuillet de lumière, présentant :

une déconvolution de l'image tridimensionnelle dans la direction z, comprenant : pour chaque vecteur d'intensité de N intensités $(I_{x,y,1},...,I_{x,y,n})$ ayant la même valeur x/y, une multiplication par une matrice de déconvolution tridiagonale N X N qui associe à chaque voxel $(x, y, n)$ un paramètre de correction f1 avec lequel, en multipliant la matrice de déconvolution par le vecteur d'intensité $(I_{x,y,1}...,I_{x,y,n})$ pour une composante $I(x, y, n)$ du vecteur d'intensité, les intensités $I(x, y, n+1)$ et $I(x, y, n-1)$ des voxels correspondants des plans d'image adjacents sont multipliés avant d'être soustraits de la valeur d'intensité $I(x, y, n)$, la distance entre deux plans de feuillets lumineux étant supérieure à la demi-largeur de la fonction d'étalement du point dans la direction z.

2. Procédé selon la revendication 1, dans lequel le facteur de correction f1 est choisi de façon à être plus grand à mesure que la profondeur de pénétration du feuillet de lumière dans le tissu augmente dans la direction x.

3. Procédé selon la revendication 1 ou la revendication 2, comprenant en outre :
le fait de déterminer le facteur de correction f1 au point de pénétration du feuillet de lumière dans le tissu par :

calcul de la déconvolution ainsi que d'une mesure de qualité de l'image déconvoluée sur la base de différents paramètres de correction f1 pour une partie de l'image globale qui, à partir du point de pénétration du feuillet de lumière, comprend les k premiers voxels dans la direction x, k étant petit par rapport à l'extension de l'image dans la direction x, et
choix du paramètre de correction f1 pour lequel la mesure de qualité calculée correspond à la plus grande amélioration de qualité.

4. Procédé selon l'une des revendications précédentes, comprenant en outre :

le fait de représenter la dépendance du paramètre de correction f1 à la profondeur de pénétration dans la direction x par une fonction monotone croissante du paramètre de correction f1(x) ;
le fait, pour différentes fonctions f1(x), de calculer la déconvolution respective dans la direction z de l'image globale ainsi qu'une mesure de qualité de l'image globale déconvoluée,
le fait de sélectionner la fonction f1(x) qui fournit la meilleure mesure de qualité, en tant que fonction représentant la valeur de correction f1(x) dépendant de la profondeur d'entrée.

5. Procédé selon l'une des revendications précédentes, comprenant en outre :
le fait de réaliser une déconvolution de l'image dans le plan x/y pour chaque plan d'image en utilisant une fonction d'étalement ponctuel bidimensionnel dont le rayon dépend de la profondeur de tissu du voxel à déconvoluer dans la direction z.

6. Procédé selon la revendication 5, comprenant :

pour chaque plan d'image, le fait d'effectuer la déconvolution bidimensionnelle pour différentes fonctions d'étalement de point qui dépendent de la profondeur du tissu ;

le fait de calculer une mesure de qualité pour l'image déconvoluée,

le fait de sélectionner une fonction d'étalement ponctuel dépendant de la profondeur du tissu, qui conduit à une valeur de contraste améliorée, parmi la pluralité de fonctions d'étalement ponctuel pour lesquelles la déconvolution a été calculée.

7. Procédé selon la revendication 6, dans lequel pour la fonction d'étalement ponctuel dépendant de la profondeur du tissu, il est utilisé une fonction dont le rayon augmente avec l'augmentation de la profondeur du tissu, l'augmentation de l'agrandissement du rayon diminuant toutefois de préférence de manière continue.

8. Procédé selon l'une des revendications 5 à 7, dans lequel il est choisi comme fonction d'étalement ponctuel une fonction pour laquelle l'amplitude moyenne des hautes fréquences spatiales, qui se situent au-delà d'un seuil de fréquence spatiale, est un minimum ou ne s'écarte pas d'un minimum de plus d'une valeur seuil prédéterminée.

9. Programme d'ordinateur comprenant un code de programme d'ordinateur qui, lorsqu'il est exécuté par un ordinateur, amène ce dernier à mettre en œuvre un procédé selon l'une des revendications 1 à 8.

Fig. 1

Fig. 2

Fig. 3

Fig. 4

Fig. 5

Fig. 6

Fig. 7

Fig. 8

Fig. 9

Fig. 10

Fig. 11

Fig. 12

2 mm

Fig. 13

2 mm

Fig. 14

2 mm

Fig. 15

Fig. 16

2 mm

Fig. 17

2 mm

Fig. 18

Fig. 19

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

• DE 102016123458 B3

**In der Beschreibung aufgeführte Nicht-Patentliteratur**

• **SARDER, PINAKI** ; **NEHORAI, ARYE**. Deconvolution methods for 3-D fluorescence microscopy images.. *IEEE Signal Processing Magazine*, 2006, vol. 23 (3), 32-45
• **PREZA, CHRYSANTHE et al.** Regularized linear method for reconstruction of three-dimensional microscopic objects from optical sections. *JOSA A*, 1992, vol. 9 (2), 219-228
• **MOHAMMAD SHORIF UDDIN et al.** Restoration of Uneven Illumination in Light Sheet Microscopy Images. *MICROSCOPY AND MICROANALYSIS*, 01 August 2011, vol. 17 (4), ISSN 1431-9276, 607-613
• **PELI, ELI**. Contrast in complex images. *JOSA A*, 1990, vol. 7 (10), 2032-2040
• **FLOCK, STEPHEN T. et al.** Monte Carlo modeling of light propagation in highly scattering tissues. I. Model predictions and comparison with diffusion theory.. *IEEE Transactions on Biomedical Engineering*, 1989, vol. 36 (12), 1162-1168